Europäisches Patentamt

European Patent Office

Office européen des brevets

(19)

(11) Veröffentlichungsnummer: **0 338 973 B1**

(12) **EUROPÄISCHE PATENTSCHRIFT**

(45) Veröffentlichungstag der Patentschrift:
18.12.91 Patentblatt 91/51

(51) Int. Cl.⁵: **F16B 19/14**

(21) Anmeldenummer: 89810183.7

(22) Anmeldetag: 09.03.89

(54) **Befestigungselement mit Führungsrondelle.**

(30) Priorität: 20.04.88 DE 3813245

(43) Veröffentlichungstag der Anmeldung:
25.10.89 Patentblatt 89/43

(45) Bekanntmachung des Hinweises auf die
Patenterteilung:
18.12.91 Patentblatt 91/51

(84) Benannte Vertragsstaaten:
AT CH DE ES FR GB IT LI SE

(56) Entgegenhaltungen:
DE-A- 1 960 604
DE-A- 2 421 937
FR-A- 2 195 285

(73) Patentinhaber: HILTI Aktiengesellschaft
FL-9494 Schaan (LI)

(72) Erfinder: Jochum, Peter
Dürre Wiese 12
A-6812 Meiningen (AT)

(74) Vertreter: Wildi, Roland
Hilti Aktiengesellschaft Patentabteilung
FL-9494 Schaan (LI)

## Beschreibung

Die Erfindung betrifft ein Befestigungselement zum Eintreiben in harte Aufnahmematerialien, wie Metall und dgl., mit einem Mittel zur Drehmitnahme aufweisenden Kopf, einem mit einer Führungsrondelle versehenen Schaft und einer in Eintreibrichtung daran anschliessenden Spitze, wobei der Schaft zumindest in seinem rückwärtigen Endbereich mit Gewinde versehen ist.

Für die Serienbefestigung insbesondere von Blechen an beispielsweise aus Stahlträgern bestehenden Unterkonstruktionen ist bisher hauptsächlich die sogenannte Direktmontage bekannt, bei welcher ein nagelartiges Befestigungselement meist mit Hilfe von Pulverkraft durch das zu befestigende Blech hindurch in die Unterkonstruktion, dh in den Träger eingetrieben wird. Dieses Verfahren ist rationell und führt auch zu einer hohen Befestigungsqualität, da es zu einer Kaltverschweissung des Befestigungselementes mit der Unterkonstruktion kommt. Das Eintreiben der Befestigungselemente mittels Pulverkraft ist ausserdem unabhängig von Energieversorgungssystemen, wie beispielsweise einem Druckluft- oder elektrischen Netz. Allerdings sind solche Befestigungen meist nur unter Zerstörung der Bleche lösbar.

Eine weitere bekannte Art der Serienbefestigung von Blechen ist die Verwendung von Schrauben. Dabei werden heute meistens Selbstbohrschrauben verwendet, welche eine Bohrschneide aufweisen, mit der sie sich das Loch im Blech sowie in der Unterkonstruktion selbst bohren und anschliessend ein Gewinde schneiden. Während solche Befestigungen lösbar sind erfordert das Bohren und Gewindeschneiden einen hohen Zeitaufwand und auch netzabhängige Bohr- und/oder Schraubgeräte.

Aus der DE-A-2421937 ist für die vorgenannten Fälle eine Befestigungsmethode bekannt, welche zum Durchtreiben eines Befestigungselementes einerseits durch die Bleche und andererseits durch die Unterkonstruktion hindurch auf die bekannte Lehre der Direktmontage zurückgreift. Die endgültige Verankerung des Befestigungselementes erfolgt manuell, mittels herkömmlicher Werkzeuge, wie Schraubenschlüssel und dergleichen. Das für diese Befestigungsmethode bekannte Befestigungselement weist einen Kopf mit Mitteln zur Drehmitnahme, einen Schaft mit Führungsrondelle und Gewinde auf.

Während diese bekannte Befestigungsmethode den Vorteil hat, dass sie nach Art der Direktmontage unabhängig von Versorgungssystemen ist, besteht der gravierende Nachteil im hohen Zeit- und Manipulationsaufwand, da zwei Vorgänge aneinandergereiht sind, welche mit jeweils eigens dafür vorgesehenen Werkzeugen durchzuführen sind, nämlich einerseits der Durchtreibvorgang mittels einem pulverkraftbetriebenen Setzgerät und andererseits der eigentliche Verankerungsvorgang mittels Drehmoment aufbringenden Werkzeugen.

Aus der DE-A-3518517 ist eine Eintreibvorrichtung bekannt, welche nach Art eines pulverkraftbetriebenen Setzgerätes aufgebaut ist und in der Lage ist, eine Axialbewegung auszuführen und nach Zurücklegung eines bestimmten Axialweges zumindest eine Drehbewegung, gegebenenfalls einem weiteren Axialweg überlagert, ausführt. Zu diesem Zweck weist die Antriebseinrichtung einen Doppelkolben, bestehend aus einem Schaftkolben und einem Ringkolben auf. Die Funktion erfolgt in der Weise, dass zu Beginn des Eintreibvorganges Schaftkolben und Ringkolben zusammen beschleunigt werden und bei Abbremsen des Schaftkolbens der Ringkolben dem Schaftkolben eine Drehbewegung erteilt. Es ist damit möglich, mit dieser bekannten Antriebseinrichtung gewindefurchende Schrauben zu setzen, indem diese vorerst axial durch die Bleche und die Unterkonstruktion hindurch getrieben werden und je nach Eintreibwiderstand den Schaftkolben abbremsen, so dass unter drehschlüssiger Verbindung zwischen Schaftkolben und Befestigungselementen letzteren eine Drehbewegung zum schlussendlichen Eindrehen erteilt wird.

Die Problematik beim Eintreiben von Befestigungselementen mittels dieser bekannten Antriebseinrichtung besteht darin, dass je nach Widerstand, welcher von den Blechen und der Unterkonstruktion dem Befestigungselement entgegengebracht wird, ein Abbremsen des Schaftkolbens nicht immer in gleichem Masse erfolgt. Dies kann dazu führen, dass das Befestigungselement bei zu vorzeitigem Abbremsen des Schaftkolbens zu wenig eingedreht wird, oder bei wenig Eintreibwiderstand das Abbremsen des Schaftkolbens derart spät erfolgt, dass die noch hohe antriebseinrichtungsseitige Energie kein ausreichendes Eindrehen des Befestigungselementes ermöglicht.

Der Erfindung liegt demnach die Aufgabe zugrunde, für die vorgenannte, nach Art eines pulverkraftbetriebenen Setzgerätes arbeitende Antriebseinrichtung ein Befestigungselement zu schaffen, welches bei unterschiedlichen Anwendungsbedingungen, dh unterschiedlichem Widerstand von Blechen und Unterkonstruktion, immer ausreichende Verankerungswerte gewährleistet.

Erfindungsgemäss wird die Aufgabe dadurch gelöst, dass die Führungsrondelle haubenartig ausgebildet ist, wobei deren Boden in Gewindeverbindung mit dem Schaft steht, im Bereich des entgegen der Eintreibrichtung gesehenen Beginns des Gewindes und im Abstand von der eintreibrichtungsseitigen Stirnfläche des Kopfes angeordnet ist und die eintreibrichtungsseitige Stirnseite des Randes die eintreibrichtungsseitige Stirnfläche des Bodens in Eintreibrichtung überragt.

Beim Setzen des erfindungsgemäss vorgeschlagenen Befestigungselementes mittels der aus der DE-OS 3518517 bekannten Antriebseinrichtung erfolgt in einem ersten Arbeitsgang ein axiales Durchtreiben des Befestigungselementschaftes durch die Bleche und die Unterkonstruktion hindurch. Massgebend ist hierzu der Schaftkolben der bekannten Antriebseinrichtung. Das für das Aufbringen der Drehbewegung auf das Befestigungselement massgebende Abbremsen des Schaftkolbens wird beim erfindungsgemäss vorgeschlagenen Befestigungselement nunmehr durch die haubenartig ausgebildete Führungs rondelle unterstützt. Erfolgt bei hohem Eintreibwiderstand des Befestigungselementes das Abbremsen sehr früh, sorgt die haubenartige Form der Führungsrondelle für ein ausreichendes Anpressen der Bleche auf die Unterkonstruktion. Ist der Eintreibwiderstand des Befestigungselementes dagegen gering, sorgt die haubenartige Führungsrondelle bei Auftreffen ihres Randes für ein ausreichendes Abbremsen des Schaftkolbens, wobei bei noch hoher zur Verfügung stehender Energie dies unter Verformung der haubenartigen Form der Führungsrondelle erfolgt. Nachdem der entgegen der Eintreibrichtung gesehene Beginn des Gewindes im Bereich der Führungsrondelle liegt, ist gewährleistet, dass bei Auftreffen dieses Gewindes auf den Blechen und der Unterkonstruktion das Abbremsen des Schaftkolbens derart hoch ist, dass eine Ueberlagerung der Drehbewegung in ausreichender Weise erfolgt. Dank der haubenartigen Ausbildung der Führungsrondelle ist damit gewährleistet, dass in allen Anwendungsfällen ein ausreichendes Anpressen der Bleche gegeben ist und andererseits ein Ausreissen der Gewindeverbindung durch zu spätes Abbremsen des Schaftkolbens vermieden wird.

Da der Boden der Führungsrondelle im Bereich des entgegen der Eintreibrichtung gesehenen Beginns des Gewindes angeordnet ist, ist gewährleistet, dass bei geringem Eintreibwiderstand, dh wenn vom Schaftkolben her noch hohe Energie zur Verfügung steht, ein ausreichendes Abbremsen bereits stattgefunden hat, wenn der Gewindebeginn auf den Blechen und der Unterkonstruktion auftrifft. Das Befestigungselement ist damit in der Lage, sich sein Gewinde in den Blechen und der Unterkonstruktion selbst zu formen. Ausserdem wird dadurch eine Möglichkeit geschaffen, zwischen Führungsrondelle und Befestigungselement eine Gewindeverbindung vorzusehen, welche weiter dazu beiträgt, die Bremswirkung derart hoch zu halten, dass dem Befestigungselement eine aureichende Drehbewegung erteilt wird.

Die Führungsrondelle weist vorzugsweise einen sich vom Boden weg in Eintreibrichtung kegelförmig erweiternden Wandbereich auf, was dazu führt, dass einerseits auf den Blechen eine grosse, zu hohen Ueberzugswerten führende Auflagefläche entsteht und andererseits zwischen dem Schaft des Befestigungselementes und der Führungsrondelle die Verbindung in ausreichendem Masse sicherstellt.

Aus der Sicht der Verformung beträgt der Kegelwinkel dieses sich kegelförmig erweiternden Wandbereiches beispielsweise 80° bis 120°. Ausserdem wirkt sich eine Wandstärke, die zum Rand hin zunimmt weiterhin vorteilhaft aus. Dank dieser Ausbildung der Wandstärke, welche in der Grössenordnung von 10 bis 20% zunehmen kann, ist die Gefahr einer Schwächung der Führungsrondelle während des Eintreibvorganges, beispielsweise durch Verschleiss und Abnutzung, unterbunden.

Einer weiteren Ausführungsform der Erfindung entsprechend ist in Eintreibrichtung anschliessend an den Mittel zur Drehmitnahme aufweisenden Kopf ein über einen Sollbruchsteg verbundener, eine Anschlagschulter bildender Kopf am Befestigungselement angeordnet. Dieser Sollbruchsteg bildet eine Art Ueberlastkupplung, indem selbst bei ausserordentlich geringem Eintreibwiderstand des Befestigungselementes gewährleistet ist, dass bei noch hoher, von der Antriebseinrichtung zur Verfügung stehender Energie das Drehmoment nicht zu einem Losreissen des Befestigungselementes führt, sondern lediglich den Sollbruchsteg durchtrennt und damit den Mittel zur Drehmitnahme aufweisenden Kopf abschert. Der Schaftkolben kann damit bei noch vorhandener Energie seitens der Antriebseinrichtung, selbst bei nicht aufgehobener Verbindung zwischen Schaftkolben und dem Mittel zur Drehmitnahme aufweisenden Kopf, lose durchdrehen.

Die Erfindung soll nachstehend anhand der sie beispielsweise wiedergebenden Zeichnungen näher erläutert werden. Es zeigen :

Fig. 1 ein erfindungsgemässes Befestigungselement, teilweise im Schnitt dargestellt, im setzbereiten Zustand,

Fig. 2 das Befestigungselement gemäss Fig. 1 in fertig verankertem Zustand,

Fig. 3 eine weitere Ausführungsform eines erfindungsgemässen Befestigungselementes.

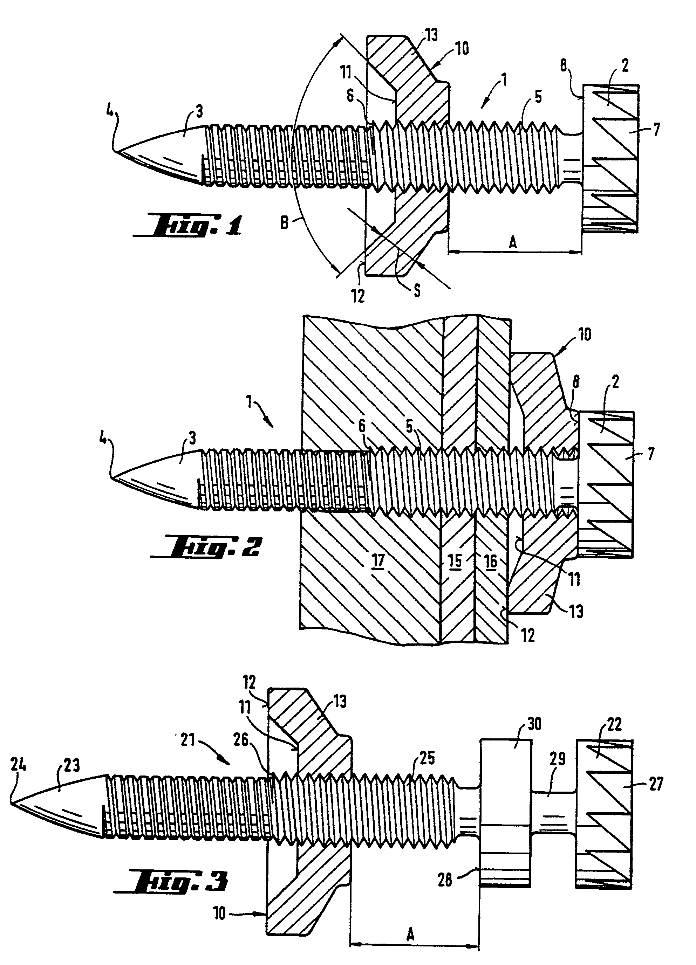

Das aus Fig. 1 und 2 ersichtliche, insgesamt mit 1 bezeichnete Befestigungselement weist einen zylindrischen Kopf 2, einen Schaft 3 und an dem, dem Kopf 2 entgegengesetzten Ende des Schaftes 3 eine Spitze 4 auf. Der Schaft 3 ist mit einem Gewinde 5 versehen. Im vorderen Bereich des Schaftes 3 ist das Gewinde 5 bis zu einem Absatz 6 teilweise abgedreht. Der Kopf 2 ist mit sägezahnförmigen Drehmitnahmenuten 7 versehen. Im Abstand A von der eintreibrichtungsseitigen Stirnfläche 8 des Kopfes 2 ist eine insgesamt mit 10 bezeichnete Führungsrondelle angeordnet. Die Führungsrondelle 10 ist haubenartig ausgebildet. Ein Boden 11 der Führungsrondelle 10 steht im Eingriff mit dem Gewinde 5 auf dem Schaft 3. Die eintreibrichtungsseitige Stirnseite des Randes 12 der Führungsrondelle 10 überragt den Boden 11 in Eintreibrichtung. Die Führungsrondelle 10 weist einen sich vom Boden 11 weg in Eintreibrichtung kegelförmig erweiternden Wandbereich 13 auf. Der Kegelwinkel B des sich in Eintreibrichtung kegelförmig erweiternden Wandbereiches beträgt zwischen 80 und 120°. Die Wandstärke S des Wandbereiches 13 nimmt zum Rand 12 hin zu.

Bei der in Fig. 2 dargestellten fertigen Befestigung hat das Befestigungselement 1 zwei zu befestigende Bleche 15, 16 sowie einen darunter liegenden Träger 17 durchdrungen. Das Befestigungselement hat sich dabei im Träger 17 ein Gewinde geformt. Die Führungsrondelle 10 wurde beim Setzvorgang weiter auf den Schaft 3 aufgeschraubt, bis sie schliesslich an der eintreibrichtungsseitigen Stirnfläche 8 des Kopfes 2 zur Anlage gelangt ist. Die Führungsrondelle 10 wurde ausserdem durch Flachdrücken verformt. Bei diesem Aufschrauben und anschliessendem Verformen der Führungsrondelle 10 wird allfällig vorhandene Ueberenergie abgebaut.

Das aus Fig. 3 ersichtliche, insgesamt mit 21 bezeichnete Befestigungselement entspricht in wesentlichen Teilen der in Fig. 1 und 2 dargestellten Ausführung. So weist es ebenfalls einen Kopf 22, einen Schaft 23 und eine Spitze 24 auf. Der Schaft 23 ist mit einem Gewinde 25 sowie einem Absatz 26 versehen. Der Kopf 22 weist Drehmitnahmenuten 27 auf. Die Führungsrondelle 10 ist ebenfalls in axialem Abstand A von der eintreibrichtungsseitigen Stirnfläche 28 des Kopfes angeordnet. Im Unterschied zu der in Fig. 1 und 2 dargestellten Ausführung ist jedoch in Eintreibrichtung anschliessend an den Mittel zur Drehmitnahme aufweisenden Kopf 22 ein weiterer, über einen Sollbruchsteg 29 verbundener, eine Anschlagschulter bildender Kopf 30 angeordnet. Beim Setzvorgang wird nach dem vollständigen Einschrauben des Befestigungselementes der die Mittel zur Drehmitnahme aufweisende Kopf 22 am Sollbruchsteg 29 abgeschert. Der verbleibende Kopf 30 weist keine Mittel zur Drehmitnahme auf. Die Befestigung ist somit ohne spezielle Hilfsmittel nicht mehr lösbar.

## Patentansprüche

1. Befeetigungselement (1, 21) zum Eintreiben in harte Aufnahmematerialien, wie Metall und dgl., mit einem Metall zur Drehmitnahme aufweisenden Kopf (2, 22), einem mit einer Führungerondelle (10) versehenen Schaft (3, 23) und einer in Eintreibrichtung daran anschliessenden Spitze (4, 24), wobei der Schaft (3, 23) zumindest in seinem rückwärtigen Endbereich mit Gewinde (5, 25) versehen ist, **dadurch gekennzeichnet, dass** die Führungerondelle (10) haubenartig ausgebildet ist, wobei deren Boden (11) in Gewindeverbindung mit dem Schaft (3, 23) steht, im Bereich des entgegen der Eintreibrichtung gesehenen Beginns des Gewindes (5, 25) und im Abstand (A) von der eintreibrichtungsseitigen Stirnfläche (8, 28) des Kopfes (2, 22) angeordnet ist und die eintreibrichtungsmeitige Stirnseite des Randes (12) die eintreibrichtungsseitige Stirnfläche dem Bodens (11) in Eintreibrichtung überragt.

2. Befestigungselement nach Anspruch 1, dadurch gekennzeichnet, dass die Führungsrondelle (10) einen sich vom Boden (11) weg in Eintreibrichtung kegelförmig erweiternden Wandbereich (13) aufweist.

3. Befestigungselement nach Anspruch 2, dadurch gekennzeichnet, dass der Regelwinkel (B) des sich in Eintreibrichtung kegelförmig erweiternden Wandbereichs (13) 80° bis 120° beträgt.

4. Befestigungselement nach einem der Ansprüche 1 bis 3, dadurch gekennzeichnet, dass die Wandstärke (S) der Führungsrondelle (10) zum Rand (12) hin zunimmt.

5. Befestigungselement nach einem der Ansprüche 1 bis 4, dadurch gekennzeichnet, dass in Eintreibrichtung anschliessend an den Mittel zur Drehmitnahme aufweisenden Kopf (22) ein über einen Sollbruchsteg (29) verbundener, eine Anschlagschulter bildender Kopf (30) angeordnet ist.

## Claims

1. A fastening element (1, 21) for driving into hard reception materials, such as metal and the like, with a head (2, 22) having means for rotary entrainment, a shank (3, 23) provided with a guide washer (10) and with a tip (4, 24) adjoining thereto in the driving-in direction, in which respect the shank (3, 23) is provided with a thread (5, 25) at least in its rearward end region, characterised in that the guide washer (10) is designed in a dome-like manner, in which respect the base (11) thereof stands in threaded connection with the shank (3, 23), is arranged in the region of the commencement, considered contrary to the driving-in direction, of the thread (5, 25) and at a spacing (A) from the driving-in-direction-sided front end surface (8, 28) of the head (2, 22) and the driving-in-direction-sided front end side of the edge (12) projects in the driving-in direction beyond the driving-in-direction-sided front end surface of the base (11).

2. A fastening element according to claim 1, characterised in that the guide washer (10) has a wall region (13) which widens conically in the driving-in direction away from the base (11).

3. A fastening element according to claim 2, characterised in that the cone angle (B) of the wall region (13)

4

widening conically in the driving-in direction amounts to 80° up to 120°.

4. A fastening element according to one of claims 1 to 3, characterised in that the wall thickness (S) of the guide washer (10) increases towards the edge (12).

5. A fastening element according to one of claims 1 to 4, characterised in that a head (30) is arranged in the driving-in direction adjacent to the head (22) having means for rotary entrainment, to form a stop shoulder and which is connected by way of a predetermined breaking web (29).

## Revendications

1. Elément de fixation (1, 21) pour l'enfoncement dans des matériaux de réception durs tels que du métal et analogue, comprenant une tête (2, 22) avec des moyens pour l'entraînement en rotation, une tige (3, 23) munie d'une rondelle de guidage (10) à laquelle fait suite, dans la direction d'enfoncement, une pointe (4, 24), la tige (3, 23) étant munie au moins dans sa section terminale postérieure d'un filetage (5, 25), **caractérisé en ce** que la rondelle de guidage (10) est conformée en capuchon, son fond (11) étant en liaison vissée avec la tige (3, 23), qu'elle est disposée dans la région du début du filetage (5, 25), vu dans le sens opposé à la direction d'enfoncement, et à la distance (A) de la surface frontale (8, 28) du côté enfoncement de la tête (2, 22), et que la face frontale du côté enfoncement du rebord (12) dépasse de la face frontale du côté enfoncement du fond (11).

2. Elément de fixation selon la revendication 1, caractérisé en ce que la rondelle de guidage (10) présente une section de paroi (13) qui s'élargit de manière conique dans la direction d'enfoncement en s'éloignant du fond (11).

3. Elément de fixation selon la revendication 2, caractérisé en ce que l'angle de cône (B) de la section de paroi (13) s'élargissant de manière conique dans la direction d'enfoncement est de 80° à 120°.

4. Elément de fixation selon l'une des revendications 1 à 3, caractérisé en ce que l'épaisseur de paroi (S) de la rondelle de guidage (10) augmente en direction du bord (12).

5. Elément de fixation selon l'une des revendications 1 à 4, caractérisé en ce que, vu dans la direction d'enfoncement, la tête (22) munie de moyens pour l'entraînement en rotation est suivie d'une tête (30) formant un épaulement d'arrêt rattachée par l'intermédiaire d'une barrette de rupture (29).

**Fig: 1**

**Fig: 2**

**Fig: 3**